# EUROPEAN PATENT APPLICATION

(11) **EP 4 046 837 A1**
(43) Date of publication of application: **24.08.2022**
(21) Application number: 22155239.1
(22) Date of filing: 04.02.2022
(51) Int. Cl.: B60H 1/34, F24F 13/14

(54) **AIR DIFFUSER**

(30) Priority: 18.02.2021 ES 202130132
(71) Applicant: Seat, S.A., 08760 Martorell (ES)
(72) Inventor: PRADAS CAULIN, Angel, MARTORELL (ES); DEL CAMPO MELGAREJO, Luis, MARTORELL (ES); JUAREZ ENGUIDANOS, Antonio, MARTORELL (ES)
(74) Representative: Ponti & Partners, S.L.P

(57) **Abstract**

Air diffuser comprising a casing (C) that defines a passageway for an air flow from an inlet opening (A1) to an outlet opening (A2), one or more movable slats of a first type (LVa), to move between a plurality of first positions, to control the direction of the air flow according to a first direction, one or more movable slats of a second type (Lha, Lhb), to move between a plurality of second positions, to control the direction of the air flow according to a second direction, different from the first direction, and to regulate the flow rate thereof and even block the passage thereof, and a single actuator element connected to the movable slats (LVa, Lha, Lhb) to independently control the movements thereof between the plurality of first and second positions.

## Description

### Technical field

The present invention relates to an air diffuser, which is configured to control both the direction and the air flow rate with a single actuator element that has a reduced number of parts, and that is compact and easy to assemble.

### Prior state of the art

Air diffusers comprising the features of the preamble of claim 1 of the present invention are known.

Such is the case of the one proposed in patent EP1207062B1. However, in said patent the movable slats of a first and a second type of diffuser only enable the direction of the air flow to be controlled, but do not enable the flow rate thereof to be regulated or the passage of the air flow to be blocked. For this purpose, in the air diffuser described in said patent, there is a hatch arranged deeper inside the air diffuser casing, i.e., closer to the air inlet opening of the casing.

This means that the air diffuser proposed in patent EP1207062B1 occupies a considerable volume, as it requires a considerably long casing to house, depending on the outlet direction of the air flow, the hatch, the movable slats of a second type and the movable slats of a first type, consecutively.

Moreover, in order to kinematically connect the hatch and the two types of movable slats to control the movement thereof with a single actuator element, it is made up of a large number of parts, and occupies a large volume, which also entails the need for a casing of considerable volume, and also reduces the space available for the circulation of the air flow, by interposing such parts therein.

It is therefore necessary to offer an alternative to the state of the art that covers the gaps found therein, by providing an air diffuser that does not suffer from the known drawbacks, and that therefore enables both the direction, in two directions, of the air flow, as well as the flow rate and even blocking thereof to be controlled, including a compact casing with few elements that interfere with the circulation of the air flow.

### Description of the invention

To this end, the present invention relates to an air diffuser, comprising:
- a casing that defines a passageway for the circulation of an air flow from an inlet opening to an outlet opening of said casing;
- at least one movable slat of a first type, configured and arranged in said casing to move between a plurality of first positions, to control at least the direction of said air flow according to a first direction (e.g. horizontal);
- at least one movable slat of a second type, configured and arranged in said casing to move between a plurality of second positions, to control at least the direction of said air flow according to a second direction (for example, vertical), different from said first direction; and
- a single actuator element kinematically and operatively connected to said at least one movable slat of a first type and to said at least one movable slat of a second type, to independently control the movements thereof between said pluralities of first and second positions, respectively.

Unlike the air diffusers of the state of the art, in the one proposed by the present invention, the at least one movable slat of a second type is configured and arranged to regulate the air flow rate when moving between the aforementioned plurality of second positions, which include a closing position wherein the at least one movable slat of a second type closes the mentioned passageway to block the passage of the air flow towards the outlet opening of the casing.

According to an exemplary embodiment,
- the at least one movable slat of a first type comprises at least one movable driving slat of a first type; and/or
- the at least one movable slat of a second type comprises at least one movable driving slat of a second type.

For an implementation of said exemplary embodiment:
- the at least one movable slat of a first type comprises only one movable driving slat of a first type, and no movable driven slat, of any type; and/or
- the at least one movable slat of a second type comprises only one movable driving slat of a second type, and no movable driven slat, of any type.

For an alternative implementation:
- the at least one movable slat of a first type comprises at least one movable driven slat of a first type, kinematically coupled to the movable driving slat of a first type to move jointly between respective pluralities of first positions; and/or
- the at least one movable slat of a second type comprises at least one movable driven slat of a second type, kinematically coupled to the movable driving slat of a second type to move jointly between respective pluralities of second positions.

For an alternative implementation:
- the at least one movable slat of a first type comprises only one movable driving slat of a first type, and no movable driven slat, of any type; and/or
- the at least one movable slat of a second type comprises at least one movable driven slat of a second type, kinematically coupled to the movable driving slat of a second type to move jointly between respective pluralities of second positions.

For an exemplary embodiment, the movable driving slat of a second type and at least the movable driven slat of a second type are configured and arranged to partially overlap in said closing position, thus closing the passageway to block the passage of the air flow to the outlet opening of the casing.

According to an exemplary embodiment, the only actuator element comprises:
- a first portion mechanically connected to the movable driving slat of a first type; and/or
- a second portion mechanically connected to the movable driving slat of a second type. For an exemplary embodiment of the air diffuser of the present invention:
- at least the movable driving slat of a first type is hingedly fixed to a perimeter wall of a front section of the casing through a first hinge axis, to rotate with respect thereto during the mentioned movement between the respective pluralities of first positions; and/or
- the at least one movable driving slat of a second type is hingedly fixed to a perimeter wall of a rear section of the casing, in fluid communication with the front section, through a second hinge axis, to rotate with respect thereto during the mentioned movement between the respective pluralities of second positions.

For a variant of said exemplary embodiment, for which there is at least one movable driven slat of a first type and/or at least one movable driven slat of a second type:
- the at least one movable driven slat of a first type is also hingedly fixed to the perimeter wall of a front section of the casing through a respective first hinge axis, parallel to the first hinge axis to which the movable driving slat of a first type is fixed, to rotate with respect thereto during said movement between the respective pluralities of first positions; and/or
- the at least one movable driven slat of a second type is also hingedly fixed to the perimeter wall of a rear section of the casing, in fluid communication with the front section, through a respective second hinge axis, parallel to the second hinge axis to which the movable driving slat of a second type is fixed, to rotate with respect thereto during said movement between the respective pluralities of second positions.

According to an exemplary embodiment, the mentioned first portion of the actuator element comprises a first end, or grip end, to be grasped by a user to move the first portion and the movable driving slat of a first type with it, according to the mentioned rotation with respect to the respective first hinge axis thereof.

According to an implementation of said exemplary embodiment, the first portion of the actuator element is directly connected to the movable driving slat of a first type with freedom of rotation with respect to a first rotation axis, which is orthogonal to the mentioned first hinge axes, and a first end of the second portion of the actuator element is kinematically connected to a second end of the first portion, opposite the grip end, such that when a user grasps the grip end of the first portion of the actuator element and rotates it with respect to the mentioned first rotation axis, the second portion of the actuator element also rotates with respect to a second rotation axis that is orthogonal to the mentioned second hinge axes.

For a variant of said implementation, the movable driving slat of a first type comprises a tubular element and the first portion of the actuator element comprises at least one tubular segment with an outer diameter smaller than the inner diameter of said tubular element, and the tubular segment is located inserted and coupled with freedom of rotation in the tubular element, to rotate with respect to the mentioned first rotation axis, providing the mentioned direct connection to the movable driving slat of a first type.

For another variant of the mentioned implementation, alternative or complementary to the one described in the immediately preceding paragraph, a second end, opposite the first end, of the second portion of the actuator element is mechanically connected to the movable driving slat of a second type through a gear coupling, comprising a first circular toothed gear defined at the second end of the second portion of the actuator element and a second circular toothed gear, mechanically coupled to the first circular toothed gear, which is defined in a region of the movable driving slat of a second type, configured and arranged so that when rotating the second portion of the actuator element with respect to the second rotation axis, the movable driving slat of a second type also rotates with respect to the respective second hinge axis thereof.

According to an exemplary embodiment, the second portion of the actuator element is connected with freedom of rotation to a structural element of the casing arranged between the front and rear sections thereof, to rotate with respect to the second rotation axis.

According to an implementation of said exemplary embodiment, the structural element comprises a tubular member and the second portion of the actuator element comprises at least one tubular segment with an outer diameter smaller than the inner diameter of the mentioned tubular member, and said tubular segment is inserted and coupled with freedom of rotation in said tubular member, to rotate with respect to the second rotation axis.

According to a preferred exemplary embodiment, the mentioned gear coupling is a bevel gear coupling, wherein the first circular toothed gear is a bevel toothed wheel (or a bevel toothed wheel section) and the second circular toothed gear is a bevel toothed wheel section.

Other types of gears can be used, the first rotation axis of the first toothed gear being perpendicular to the second rotation axis of the second toothed gear. Thus, the teeth can be of the straight bevel, helical bevel or spiral bevel type, among others.

For an exemplary embodiment, the mentioned region of the movable driving slat of a second type is located adjacent to an indentation defined on one side of the movable driving slat of a second type, the indentation being configured so that the first circular toothed gear is arranged with freedom of rotation therein, that is, that it does not interfere with the movable driving slat of a second type at any time during the rotation thereof about the second rotation axis.

According to an exemplary embodiment, the air diffuser of the present invention comprises a coupling element that hingedly connects the first portion with the second portion of the actuator element.

According to a first implementation of said exemplary embodiment, the coupling element and part of the first and second portions of the actuator element implement a constant-velocity joint, while for a second implementation such components implement a non-constant-velocity joint.

According to an embodiment of said first implementation, the mentioned constant-velocity joint is a simple universal joint.

For a variant of said embodiment, the coupling element is a transmission shaft at the ends of which it has respective hinges that connect the transmission shaft with the first portion and the second portion of the actuator element, respectively.

According to an exemplary embodiment, each of the aforementioned hinges comprises a sphere and a bolt that crosses it and protrudes from both ends, wherein said bolts run orthogonal to each other, and wherein the spheres are inserted in said tubular segments of the first and second portions of the actuator element and said bolts are guided in respective grooves defined in the tubular walls thereof. Such bolts can be replaced by equivalent elements, such as pins that cross or simply extend from one or two opposite locations of each sphere.

For a variant of said embodiment, the coupling element is a transmission shaft at the ends of which it has respective hinges that connect the transmission shaft with the first portion and the second portion of the actuator element, respectively.

According to an embodiment of the mentioned second implementation, the non-constant-velocity joint is a double universal joint.

According to an exemplary embodiment, the air diffuser of the present invention is an air diffuser of a motor vehicle, although for other exemplary embodiments the air diffuser is configured to be installed in other kinds of locations not associated with motor vehicles.

By means of the air diffuser proposed by the present invention, it is possible to enable all the functions of orientation of the air flow according to two, generally vertical and horizontal, orthogonal directions, as well as the regulation of the air flow rate and the opening/closing for the passage of the same, by means of a single actuator element (single-lever), formed by a simple mechanism, and by having fewer parts than those known in the state of the art and occupying a smaller volume, it is also possible to provide greater compactness, having more space for air flow, minimising the impact on the efficiency of air treatment, such as load losses, flow direction, etc., and greater visual integration in the final design of the diffuser, that is, with less "visual noise" by not requiring any actuator element outside the perimeter that delimits the air diffuser.

### Brief description of the drawings

The foregoing and other advantages and features will be more fully understood from the following detailed description of exemplary embodiments with reference to the accompanying drawings, which should be considered by way of illustration and not limitation, wherein:

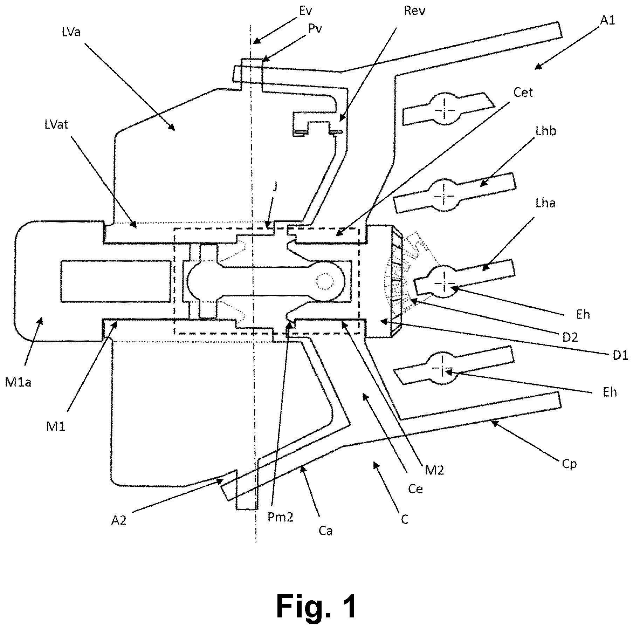

Figure 1 is a side elevation view cross-sectioned along a cutting plane that crosses the movable driving slat of a first type, including the respective first hinge axis thereof, and the actuator element, schematically showing the air diffuser of the present invention, for an exemplary embodiment, for a neutral position of the slats.

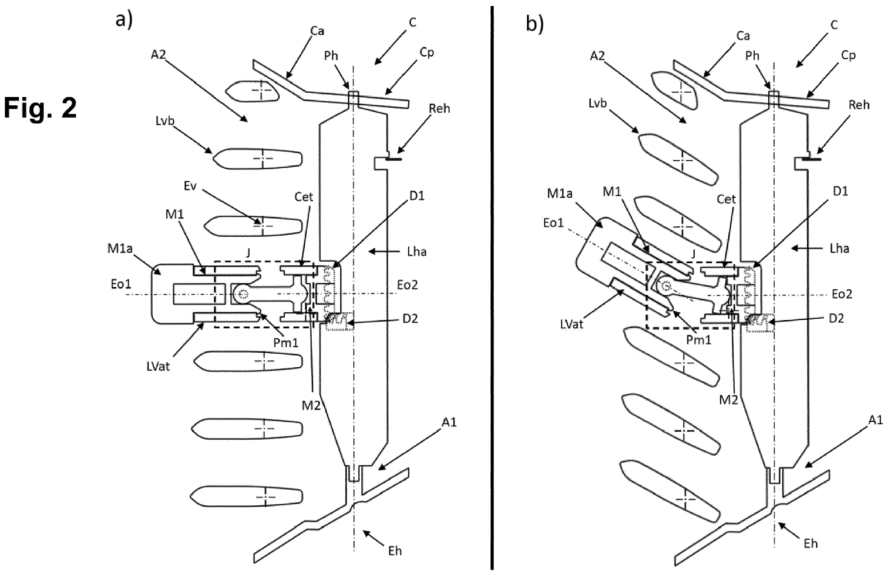

Figure 2 includes two plan views cross-sectioned along a cutting plane orthogonal to that of Figure 1 that crosses the movable driving slat of a second type, including the respective second hinge axis thereof, and the actuator element, and schematically showing the air diffuser of the present invention, for the same exemplary embodiment of Figure 1, view a) showing the air diffuser for a neutral position of all the slats, and view b) for a position in which the movable slats of a first type have been rotated by a certain angle.

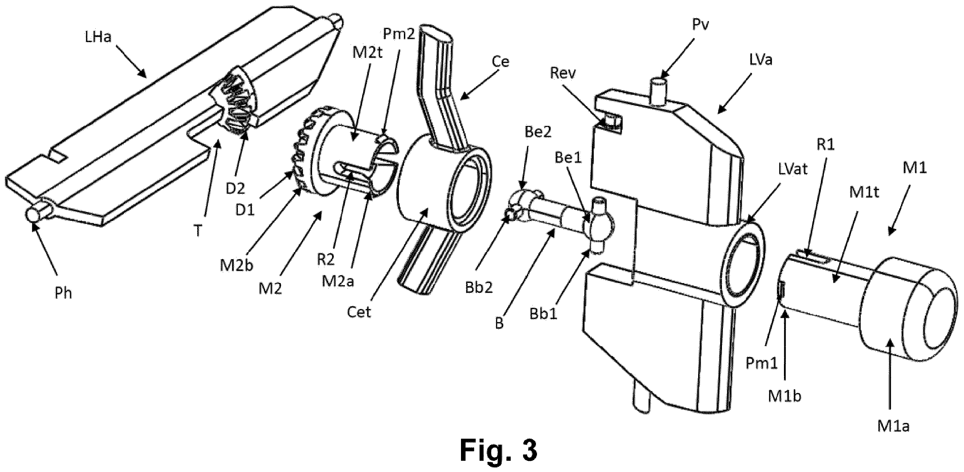

Figure 3 is an exploded perspective view showing a portion of the components of the air diffuser of the present invention, for the same exemplary embodiment of Figures 1 and 2. In the view, the illustration of some components of the air diffuser, such as the driven slats of both types, and a large portion of the casing has been omitted, showing the components of the present invention responsible for transmitting the actuation performed by a user.

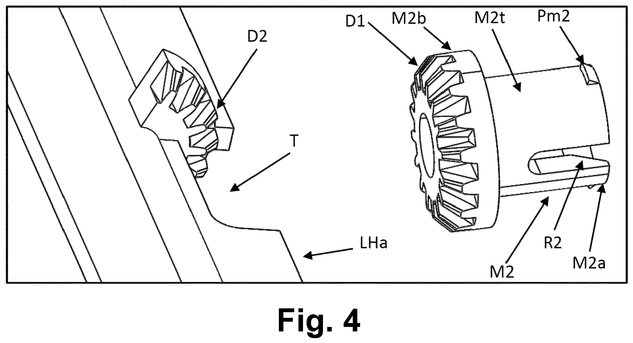

Figure 4 is an enlarged detailed view of Figure 3, centred on the gear mechanism that mechanically connects the movable driving slat of a second type with the second portion of the actuator element.

### Detailed description of some exemplary embodiments

As can be seen in the attached figures, the present invention relates to an air diffuser, comprising a casing C that defines a passageway for the circulation of an air flow from an inlet opening A1 to an outlet opening A2 of the casing C, as indicated in Figures 1 and 2.

The air diffuser further comprises a series of movable slats of a first type, including a movable driving slat LVa and movable driven slats LVb, which are configured and arranged in the casing C to move between a plurality of first positions, to control the direction of the air flow according to a first direction, in this case a horizontal direction, since for the illustrated exemplary embodiment the slats LVa, LVb run vertically (in a mounting situation of the air diffuser).

The movable driven slats of a first type LVb are kinematically coupled to the movable driven slat of a first type LVa to move jointly between respective pluralities of first positions, that is, in a coordinated movement between the movable slats of a first type, all the slats of a first type being preferably arranged parallel to each other in any of the plurality of first positions.

In particular, as can be seen in Figures 1 and 2, the movable slats of a first type, both the driving LVa and the driven LVb, are hingedly fixed to a perimeter wall of a front section Ca of the casing C through respective first hinge axes Ev, parallel to each other, to rotate with respect thereto during the movement thereof between the respective pluralities of first positions, carrying out the kinematic connection mentioned in the previous paragraph by means of a transfer mechanism Rev, which has been partially illustrated in Figures 1 and 3, which is not described in greater detail in the present document because it is of a conventional type, in order not to obscure the description of the truly novel elements of the present invention.

In this case, the hinged fixing of the movable slats of a first type, both the driving LVa and the driven LVb, is carried out through the insertion in respective holes of the front section Ca, of respective pins Pv that extend from opposite ends of each slat LVa, LVb, as shown in Figure 1 for the driving slat LVa (although for the driven slats LVb the situation is the same).

As can be seen in the attached Figures, the air diffuser of the present invention further comprises a series of movable slats of a second type, including a movable driving slat LHa and movable driven slats LHb, which are configured and arranged in the casing C to move between a plurality of second positions, to control the direction of the air flow according to a second direction, in this case a vertical direction, since for the illustrated exemplary embodiment the slats LHa, LHb run horizontally (in a mounting situation of the air diffuser).

The movable driven slats of a second type LHb are kinematically coupled to the movable driven slat of a second type LHa to move jointly between respective pluralities of second positions, that is, in a coordinated movement between the movable slats of a second type, all the slats of a second type being preferably arranged parallel to each other in any of the plurality of second positions.

As can be seen in Figures 1 and 2, the movable slats of a second type, both the driving LHa and the driven LHb slats, are hingedly fixed to a perimeter wall of a rear section Cp of the casing C, in fluid communication with the front section Ca, through respective second hinge axes Eh, parallel to each other, to rotate with respect thereto during the movement thereof between the respective pluralities of second positions, carrying out the kinematic connection mentioned in the previous paragraph by means of a transfer mechanism Reh, which has been partially illustrated in Figure 2, and which is also not described in greater detail herein for the same reasons stated above with respect to the transfer mechanism Rev.

The hinged fixation of the movable slats of a second type, both the driving LHa and the driven LHb, is carried out through the insertion in respective holes of the rear section Cp, of respective pins Ph that extend from opposite ends of each slat LHa, LHb, as shown in Figure 2 for the driving slat LHa (although for the driven slats LHb the situation is the same).

In the present invention, front section Ca of the casing C is understood as the portion of the casing C closest to the outlet opening A2. On the contrary, rear section Cp of the casing C is understood as the portion of the casing C closest to the inlet opening A1. Both front Ca and rear Cp sections are in fluid communication, enabling the air flow to run from the inlet opening A1 to the outlet opening A2.

The movable slats of a second type LHa, LHb are also configured and arranged to regulate the air flow rate when moving between the pluralities of second positions, which include a closing position wherein the slats LHa, LHb partially overlap (position not illustrated), thus closing the passageway for the circulation of the air flow, thus blocking the passage of the air flow towards the outlet opening A2 of the casing C.

The pluralities of second positions also include positions for which the airflow rate is larger and positions for which it is smaller, that is, the movable slats of a second type LHa, LHb rotate sufficiently, and are relatively dimensioned and arranged one in relation to the other, so as to interfere to a greater or lesser extent with the air flow, that is, to close the passage of the air flow towards the outlet opening A2 of the casing C more or less, or completely.

As shown in Figures 1, 2 and 3, the air diffuser of the present invention comprises a single actuator element M, or single-lever, kinematically and operatively connected to the movable slats of a first type LVa, LVb and to the movable slats of a second type LHa, LHb, to independently control the movements thereof between the pluralities of first and second positions, respectively.

In particular, the single actuator element M comprises a first portion M1 mechanically connected to the movable driving slat of a first type LVa, and a second portion M2 mechanically connected to the movable driving slat of a second type LHa.

As can be seen in Figures 1, 2 and 3, the first portion M1 comprises a first end M1a, or grip end, to be grasped by a user to move the first portion M1 and the movable driving slat of a first type Lva with it, causing it to rotate with respect to the respective first hinge axis Ev thereof, and, by means of the transfer mechanism Rev, also causing the driven slats of a first type LVb to rotate in the same way about the respective first hinge axes Ev thereof, as can be seen when comparing views a) and b) of Figure 2, which respectively represent a neutral position of all the slats LVa, LVb (i.e., a position for which they have not been rotated) and a position wherein the slats LVa, LVb have been rotated by a certain angle about the first hinge axes Ev.

For the illustrated exemplary embodiment, the first portion M1 of the actuator element M is directly connected to the movable driving slat of a first type LVa with freedom of rotation with respect to a first rotation axis Eo1 (see Figure 2), which is orthogonal to the first hinge axes Ev. As can be seen in views a) and b) of Figure 2, the first hinge axes Ev only have one degree of freedom with respect to the casing C, only enabling the rotational movement of the slats of a first type LVa, LVb. On the contrary, the first rotation axis Eo1 has two degrees of freedom with respect to the casing C, the one corresponding to the aforementioned rotation of the first portion M1 and, in addition, the one related to a movement that is integral to the movement of the slats of a first type LVa, LVb between the plurality of first positions. Thus, in any of the positions of the first portion M1, the first rotation axis Eo1 would be comprised in a plane perpendicular to the first hinge axes Ev.

A first end M2a of the second portion M2 of the actuator element M is kinematically connected to a second end M1b of the first portion M1, opposite the grip end M1a, such that when a user grasps the grip end M1a of the first portion M1 of the actuator element M and causes it to rotate with respect to the first rotation axis Eo1, the second portion M2 of the actuator element M also rotates with respect to a second rotation axis Eo2 (see Figure 2) which is orthogonal to the second hinge axes Eh.

Describing in greater detail the particular features of the exemplary embodiment illustrated in the Figures, Figures 1 to 3 show how the movable driving slat of a first type LVa comprises a tubular element Lvat and the first portion M1 of the actuator element M comprises a tubular segment M1t with an outer diameter smaller than the inner diameter of the tubular element Lvat, and wherein the tubular segment M1t is inserted and coupled with freedom of rotation in the tubular element Lvat, to rotate with respect to the first rotation axis Eo1, providing the aforementioned direct connection to the movable driving slat of a first type LVa. Such coupling is produced, for the illustrated exemplary embodiment, by deformation and elastic recovery of the tubular segment M1t when it is inserted into the tubular element Lvat, and when it overcomes, at the end of the insertion, respective tabs Pm1 (see Figure 2) and abuts against the edge of one of the ends of the tubular segment M1t.

Likewise, it can also be seen in the Figures, especially in Figures 3 and 4, that a second end M2b, opposite the first end M2a, of the second portion M2 of the actuator element M is mechanically connected to the movable driving slat of a second type LHa through a gear coupling, comprising a first circular toothed gear D1 defined at the second end M2b of the second portion M2 of the actuator element M and a second circular toothed gear D2, mechanically coupled to the first circular toothed gear D1, which is defined in a region of the movable driving slat of a second type LHa, configured and arranged so that when rotating the second portion M2 of the actuator element M with respect to the second rotation axis Eo2, the movable driving slat of a second type LHa also rotates with respect to the respective second hinge axis Eh thereof, and, by means of the transfer mechanism Reh, also causing the driven slats of a second type Lhb to rotate in the same way about the respective second hinge axes Eh thereof.

Figures 3 and 4 show how, for the illustrated exemplary embodiment, the gear coupling is a bevel gear coupling, wherein the first circular toothed gear D1 is a bevel toothed wheel and the second circular toothed gear D2 is a bevel toothed wheel section, and the region of the movable driving slat of a second type Lha mentioned in the preceding paragraph is located adjacent to an indentation T defined on one side of the movable driving slat of a second type LHc, the indentation T being configured so that the bevel toothed wheel D1 is arranged with freedom of rotation therein, meshed with the bevel toothed wheel D2 section.

As can be seen in Figures 1 and 3, the second portion M2 of the actuator element M is connected with freedom of rotation to a structural element Ce of the casing C arranged between the front Ca and rear Cp sections, to rotate with respect to the second rotation axis Eo2. Said structural element Ce is connected to the opposite walls of the casing C by means of arms. Said structural element Ce comprises such a structure as to minimise the resistance of the air flow running between the inlet opening A1 and the outlet opening A2. Such structural element Ce comprises a tubular member Cet and the second portion M2 of the actuator element M comprises a tubular segment M2t with an outer diameter smaller than the inner diameter of the tubular member Cet, and the tubular segment M2t is inserted and coupled with freedom of rotation in the tubular member Cet, to rotate with respect to the second rotation axis Eo2 (see Figure 2). Such coupling is produced, for the illustrated exemplary embodiment, by deformation and elastic recovery of the tubular segment M2t when it is inserted into the tubular member Cet, and when it overcomes, at the end of the insertion, respective tabs Pm2 (see Figure 1) and abuts against the edge of one of the ends of the tubular member Cet.

The air diffuser of the present invention comprises a coupling element that hingedly connects the first portion M1 with the second portion M2 of the actuator element M.

For the illustrated exemplary embodiment, such a coupling element and part of the first M1 and second M2 portions of the actuator element M implement a constant-velocity joint, in particular it is a simple universal joint J, as indicated in Figures 1 and 2 by means of a rectangle of dashed lines within which the elements that form the simple universal joint J are included.

In particular, as can be seen in Figures 1 to 3, for the illustrated exemplary embodiment, the coupling element is a transmission shaft B, at the ends of which it has respective hinges that connect the transmission shaft with the first portion M1 and the second portion M2 of the actuator element M, respectively. Each of the hinges comprises a sphere Be1, Be2 and a bolt Bb1, Bb2 that crosses it and protrudes at both ends, the bolts Bb1, Bb2 running orthogonal to each other.

The spheres Be1, Be2 are inserted in the tubular segments M1t, M2t of the first M1 and second M2 portions of the actuator element M and the bolts Bb1, Bb2 are guided in respective grooves R1, R2 defined in the tubular walls thereof, as can be seen in Figure 3, wherein there are two grooves R1 and they are arranged at 180° with respect to each other around the tubular wall of the tubular segment M1t, and the same happens with the grooves R2 but with respect to the tubular segment M2t. With this arrangement, rotation in all directions at both ends of the transmission shaft B and the linear movement thereof are enabled, and thus the movements of the slats LVa, LVb, LHa, LHb described above.

A person with average skill in the art could introduce changes and modifications in the exemplary embodiments described without departing from the scope of the invention as defined in the attached claims.

## Claims

1. An air diffuser, comprising:
- a casing (C) that defines a passageway for the circulation of an air flow from an inlet opening (A1) to an outlet opening (A2) of said casing (C);
- at least one movable slat of a first type (LVa, LVb)), configured and arranged in said casing (C) to move between a plurality of first positions, to control at least the direction of said air flow according to a first direction;
- at least one movable slat of a second type (LHa, LHb), configured and arranged in said casing (C) to move between a plurality of second positions, to control at least the direction of said air flow according to a second direction, different from said first direction; and
- a single actuator element (M) kinematically and operatively connected to said at least one movable slat of a first type (LVa, LVb) and to said at least one movable slat of a second type (LHa, LHb), to independently control the movements thereof between said pluralities of first and second positions, respectively;
**characterised in that** said at least one movable slat of a second type (LHa, LHb) is configured and arranged to regulate the flow rate of said air flow when moving between said plurality of second positions, which include a closing position wherein the at least one movable slat of a second type (LHa, LHb) closes said passageway to block the passage of said air flow to the outlet opening (A2) of the casing (C).

2. The air diffuser according to claim 1, wherein:
- said at least one movable slat of a first type (LVa, LVb) comprises at least one movable driving slat of a first type (LVa) and at least one movable driven slat of a first type (LVb), kinematically coupled to said movable driving slat of a first type (LVa) to move jointly between respective pluralities of first positions; and/or
- said at least one movable slat of a second type (LHa, LHb) comprises at least one movable driving slat of a second type (LHa) and at least one movable driven slat of a second type (LHb), kinematically coupled to said movable driving slat of a second type (LHa) to move jointly between respective pluralities of second positions.

3. The air diffuser according to claim 2, wherein said single actuator element (M) comprises:
- a first portion (M1) mechanically connected to said movable driving slat of a first type (LVa); and/or
- a second portion (M2) mechanically connected to said movable driving slat of a second type (LHa).

4. The air diffuser according to claim 3, wherein:
- at least said movable driving slat of a first type (LVa) is hingedly fixed to a perimeter wall of a front section (Ca) of the casing (C) through a first hinge axis (Ev), to rotate with respect thereto during said movement between the respective pluralities of first positions; and/or
- the at least one movable driving slat of a second type (LHa) is hingedly fixed to a perimeter wall of a rear section (Cp) of the casing (C), in fluid communication with said front section (Ca), through a second hinge axis (Eh), to rotate with respect thereto during said movement between the respective pluralities of second positions

5. The air diffuser according to claim 4, wherein:
- said at least one movable driven slat of a first type (LVb) is also hingedly fixed to said perimeter wall of a front section (Ca) of the casing (C) through a respective first hinge axis (Ev), parallel to the first hinge axis (Ev) to which the movable driving slat of a first type (LVa) is fixed, to rotate with respect thereto during said movement between the respective pluralities of first positions; and/or
- said at least one movable driven slat of a second type (LHb) is also hingedly fixed to said perimeter wall of a rear section (Cp) of the casing (C), in fluid communication with said front section (Ca), through a respective second hinge axis (Eh), parallel to the second hinge axis (Eh) to which the movable driving slat of a second type (LHa) is fixed, to rotate with respect thereto during said movement between the respective pluralities of second positions.

6. The air diffuser according to claim 4 or 5, wherein said first portion (M1) of the actuator element (M) comprises a first end (M1a), or grip end, to be grasped by a user to move the first portion (M1) and the movable driving slat of a first type (Lva) with it, according to said rotation with respect to the respective first hinge axis (Ev) thereof.

7. The air diffuser according to claim 6, wherein the first portion (M1) of the actuator element (M) is directly connected to the movable driving slat of a first type (LVa) with freedom of rotation with respect to a first rotation axis (Eo1), which is orthogonal to said first hinge axes (Ev), and a first end (M2a) of said second portion (M2) of the actuator element (M) is kinematically connected to a second end (M1b) of the first portion (M1), opposite said grip end (M1a), such that when a user grasps the grip end (M1a) of the first portion (M1) of the actuator element (M) and rotates it with respect to said first rotation axis (Eo1), the second portion (M2) of the actuator element (M) also rotates with respect to a second rotation axis (Eo2) that is orthogonal to said second hinge axes (Eh).

8. The air diffuser according to claim 7, wherein the movable driving slat of a first type (LVa) comprises a tubular element (Lvat) and wherein the first portion (M1) of the actuator element (M) comprises at least one tubular segment (M1t) with an outer diameter smaller than the inner diameter of said tubular element (Lvat), and wherein said tubular segment (M1t) is inserted and coupled with freedom of rotation in said tubular element (Lvat), to rotate with respect to said first rotation axis (Eo1), providing said direct connection to the movable driving slat of a first type (LVa).

9. The air diffuser according to claim 7 or 8, wherein a second end (M2b), opposite said first end (M2a), of the second portion (M2) of the actuator element (M) is mechanically connected to the movable driving slat of a second type (LHa) through a gear coupling, comprising a first circular toothed gear (D1) defined at said second end (M2b) of the second portion (M2) of the actuator element (M) and a second circular toothed gear (D2), mechanically coupled to said first circular toothed gear (D1), which is defined in a region of the movable driving slat of a second type (LHa), configured and arranged so that when rotating the second portion (M2) of the actuator element (M) with respect to said second rotation axis (Eo2), the movable driving slat of a second type (LHa) also rotates with respect to the respective second hinge axis (Eh) thereof.

10. The air diffuser according to claim 9, wherein the second portion (M2) of the actuator element (M) is connected with freedom of rotation to a structural element (Ce) of the casing (C) arranged between said front (Ca) and rear (Cp) sections, to rotate with respect to said second rotation axis (Eo2).

11. The air diffuser according to claim 10 when it depends on claim 8, wherein said structural element (Ce) comprises a tubular member (Cet) and wherein the second portion (M2) of the actuator element (M) comprises at least one tubular segment (M2t) with an outer diameter smaller than the inner diameter of said tubular member (Cet), and wherein said tubular segment (M2t) is inserted and coupled with freedom of rotation in said tubular member (Cet), to rotate with respect to the second rotation axis (Eo2).

12. The air diffuser according to any one of claims 9 to 11, wherein said gear coupling is a bevel gear coupling, wherein the first circular toothed gear (D1) is a bevel toothed wheel and the second circular toothed gear (D2) is a bevel toothed wheel section.

13. The air diffuser according to any one of claims 9 to 12, wherein said region of the movable driving slat of a second type (LHa) is located adjacent to an indentation (T) defined on one side of the movable driving slat of a second type (LHc), said indentation (T) being configured so that the first circular toothed gear (D1) is arranged with freedom of rotation therein.

14. The air diffuser according to any one of claims 3 to 13, comprising a coupling element that hingedly connects the first portion (M1) with the second portion (M2) of the actuator element (M).

15. The air diffuser according to claim 14, wherein said coupling element and part of said first (M1) and second (M2) portions of the actuator element (M) implement a constant-velocity joint.

16. The air diffuser according to claim 15, wherein said coupling element is a transmission shaft (B) at the ends of which it has respective hinges that connect said transmission shaft with the first portion (M1) and the second portion (M2) of the actuator element (M), respectively.

17. The air diffuser according to claim 16 when it depends on claim 11, wherein each of said hinges comprises a sphere (Be1, Be2) and a bolt (Bb1, Bb2) that crosses it and protrudes from both ends, wherein said bolts (Bb1, Bb2) run orthogonal to each other, and wherein the spheres (Be1, Be2) are inserted in said tubular segments (M1t, M2t) of the first (M1) and second (M2) portions of the actuator element (M) and said bolts (Bb1, Bb2) are guided in respective grooves (R1, R2) defined in the tubular walls thereof.

18. The air diffuser according to claim 14, wherein said coupling element and part of said first (M1) and second (M2) portions of the actuator element (M) implement a non-constant-velocity joint.
